Europäisches Patentamt

European Patent Office

Office européen des brevets

(11) Veröffentlichungsnummer: **0 617 225 A1**

## (12) EUROPÄISCHE PATENTANMELDUNG

(21) Anmeldenummer: **94104030.5**

(22) Anmeldetag: **16.03.94**

(51) Int. Cl.5: **F16P 3/08**

(30) Priorität: **20.03.93 DE 4309007**

(43) Veröffentlichungstag der Anmeldung:
**28.09.94 Patentblatt 94/39**

(84) Benannte Vertragsstaaten:
**AT BE CH DE ES FR GB IT LI SE**

(71) Anmelder: **ELGE ELEKTRONIK-GERÄTEWERK GmbH. & Co.**
**Sigmund-Baumgärtner-Strasse 26**
**D-91626 Schopfloch (DE)**

(72) Erfinder: **Der Erfinder hat auf seine Nennung verzichtet**

(74) Vertreter: **Otte, Peter, Dipl.-Ing.**
**Mollenbachstrasse 37**
**D-71229 Leonberg (DE)**

(54) **Sicherheitsüberwachungsverfahren bei Schutzeinrichtungen von Maschinen und Vorrichtung zur Durchführung des Verfahrens.**

(57) Bei einem Sicherheitsüberwachungssystem bei Schutzeinrichtungen mit normaler oder erhöhter Sicherheit von Drehbewegungen durchführende Maschinen (Zielanlage), wird zur Drehbewegungs- und Stillstanderkennung für jeden Achskreis jeweils ein dynamisches Signal (proportional zur Drehzahl) und ein statisches Signal (0/1) ausgewertet, wobei eine Freigabe des schützgesteuerten Antriebs-Strompfades nur dann erfolgt, wenn beide Signale gleichzeitig Maschinen-Stillstand signalisieren in Verbindung mit geschlossener Schutzeinrichtung (19) (Schutzhaube, Tür u.dgl.). Dabei kann das statische Stillstands-Erkennungssignal (L) aus einer Hardwarebeschaltung im Einschaltschützstrompfad als Kontaktgabe gewonnen und nach Abschaltung der Zielanlage der statische Signalinhalt im Sinne einer Abschaltverzögerung für einen vorgegebenen Zeitraum gespeichert werden oder das statische Stillstands-Erkennungssignal (L) wird aus einer zusätzliche Drehzahlerfassung mittels Näherungsschalter in Form eines dynamischen Signals gewonnen und geräteintern einem frequenzabhängigen Schalter zugeführt.

EP 0 617 225 A1

Stand der Technik

Die Erfindung geht aus von einem Sicherheitsüberwachungsverfahren für Schutzeinrichtungen nach dem Oberbegriff des Anspruchs 1 bzw. einer Vorrichtung zur Durchführung des Verfahrens bei Schutzeinrichtungen nach dem Oberbegriff des Anspruchs 6.

Bekannte Sicherheitsschaltungen, die auch Tür-Überwachungsbausteine umfassen, lassen sich der DE-Zeitschrift KEM 89, Januar, Seiten 55/56 entnehmen "Erst bei Störung schalten".

Bei dieser Veröffentlichung handelt es sich um den Einsatz sogenannter Sicherheitsrelais-Bausteine, durch die sich verdrahtungssparende Kompaktlösungen erzielen lassen und die auch in den Bereich der Schutztürüberwachungen und Schutztürzuhaltungen bei Maschinen eingesetzt werden können. Üblicherweise dienen solche Überwachungsschaltungen oder Zuhaltungen von Schutztüren der Sicherheit von Personen vor Unfällen durch automatische Bewegungsabläufe bei Maschinen, Anlagen und auch bestimmte Bewegungsabläufe durchführenden Industrierobotern. Mit zunehmender Komplexität von Fertigungsabläufen können solche Sicherheitsschaltungen für die Verriegelung bzw. Entriegelung von Türen oder Schutzhauben auch vermehrt im Maschinenschutz selbst vor unerwünschten Unterbrechungen automatischer Abläufe dienen. Dabei kann zwischen einer Vielzahl von Schaltungen unterschieden werden, beispielsweise den Einsatz von zwei wechselseitig arbeitenden Überwachungsschaltern, von zwei parallel arbeitenden Überwachungsschaltern und Ausführungen mit oder ohne Verriegelung (bzw. Zuhaltung). Solche Türverriegelungen existieren in federdruck- oder magnetkraftverriegelter Ausführung.

Zum Verriegeln oder Entriegeln von Türen werden üblicherweise manuell zu betätigende Tastschalter eingesetzt, so daß Verriegelungsmagnete beaufschlagt werden können, falls die entsprechenden Strompfade durch weitere, sicherheitsrelevante Schalter freigegeben sind. Gleichzeitig wird die Türposition durch Öffner oder Schließer separat zum Verriegelungsmagneten abgetastet, woraus weitere Schaltbedingungen abgeleistet werden können. Wesentlich ist hierbei ferner, daß solche Entriegelungs- bzw. Verriegelungsstromkreise für Magnete oder auf sonstiger Basis auch sogenannte Stillstandswächter in geeigneter Form enthalten, die sicherstellen, daß erst bei Stillstand der Maschine bzw. Beendigung einer Drehbewegung entriegelt und somit eine Tür oder Haube geöffnet werden kann (a.a.O. Seite 56 rechte Spalte).

Aus den DE-OS'en 38 37 218 und 39 00 733 sowie der europäischen Patentanmeldung 0 501 218 A2 sind ferner Schutzeinrichtungen zur Kriech- und Drehbewegungsüberwachung mit normaler oder erhöhter Sicherheit bei Maschinen sowie Tür- oder Schutzhaubenverriegelungssteuerungen für solche Schutzeinrichtungen bei Maschinen bekannt.

Die in der DE-OS 39 00 733 beschriebene Sicherheitsschaltung bezieht sich auf eine Überwachungsschaltung im modularen Aufbau, die durch Anreihung zusätzlicher Überwachungsschaltungen auch für Maschinen mit mehreren, jeweils Drehbewegungen durchführenden Achsen sich bezieht.

Da die vorliegende Erfindung speziell die in diesen letztgenannten Veröffentlichungen angegebenen Sicherheitsschaltungen in vorteilhafter Weise ausgestaltet, wird empfohlen, zum besseren Verständnis der Erfindung diese Schriften, auf die hiermit ausdrücklich Bezug genommen und deren Offenbarungsgehalt in die vorliegende Beschreibung einbezogen wird, zur umfassenden Klärung heranzuziehen.

Dabei ist hinsichtlich der üblichen Türverriegelungssteuerungen bei Maschinen noch darauf hinzuweisen, daß diese stets der weiter vorn schon erwähnten Stillstandswächter bedürfen, bei denen es sich im üblichen Fall um mindestens einen Drehbewegungssensor handelt, der als Parallelschalter oder Serienschalter im Verriegelungskreis des Türmagneten so angeordnet ist, daß der Magnet erst betätigt werden kann bzw. zur Türöffnung veranlaßt werden kann, wenn der Stillstandswächter festgestellt hat, daß keine Drehbewegung oder sonstige Bewegung im Bereich der jeweils zu überwachenden Achse auftritt. Der in der genannten europäischen Patentanmeldung 0 501 218 A2 beschriebenen Steuerung gelingt es, eine Tür- bzw. allgemein Schutzeinrichtungs-Verriegelung mit hoher Sicherheit redundant auszuführen und dennoch auf eine eigene äußere Sensorik zur Erfassung von (Dreh)Bewegungen zu verzichten einschließlich der sonst hierfür erforderlichen Peripherie.

Zum Teil basierend auf den Verriegelungssteuerungen und Überwachungsschaltungen der letztgenannten Druckschriften, die sämtlich auf die Anmelderin auch dieser Anmeldung zurückgehen, liegt der Erfindung die Aufgabe zugrunde, bei gleichzeitiger Beibehaltung der erhöhten Sicherheit durch redundante Abfrage von Maschinenbewegungen bzw. -stillständen die Steuerungsschaltung zu vereinfachen und insbesondere in ihrem Einsatz universeller zu gestalten.

In diesem Zusammenhang ist noch darauf hinzuweisen, daß in der EP 0 501 218 A2 zumindest schon angedeutet ist, zur Überwachung der Bewegung oder Stillstand jedes Achskreises insofern unterschiedliche Bewegungs- bzw. Stillstandssignale auszuwerten, als ein erstes Signal mittels geeigneter Encoder als dynamisches Signal gewonnen wird, indem als Bewegungssensor ein Näherungsschalter eingesetzt wird, der drehzahlabhängig den Vorbeilauf einer vorgegebenen Anzahl von Zähnezahl pro Zeiteinheit erfaßt, während ein sogenanntes statisches Stillstandssignal in beliebiger Weise etwa aus der Regelung der zu überwachenden Maschine selbst abgeleitet wird, insofern als softwaregesteuertes L-Signal bezeichnet werden kann. Mit Hilfe einer solchen redundanten, weil zweikanaligen Drehbewegungsauswertung ist eine sichere Stillstandserkennung gewährleistet. In diesem Zusammenhang können allerdings insofern Schwierigkeiten auftreten, als nicht jedes Antriebssystem das erforderliche L-Signal softwaregesteuert aus seiner eigenen Regelung zur Verfügung stellen kann, beispielsweise weil die Antriebssteuerregelung für die jeweilige Maschine nicht dafür geeignet ist oder eine Regelung gar nicht vorhanden ist.

Vorteile der Erfindung

Die Erfindung löst die genannte Aufgabe bei einem gattungsgemäßen Verfahren bzw. bei der entsprechenden Vorrichtung mit den Merkmalen des Anspruchs 1 bzw. des Unteranspruchs 6 und hat den Vorteil, daß für beliebige Antriebe und insbesondere für solche Elektromotoren, die selbst bzw. deren Regelungs- oder Steuerschaltung nicht in der Lage sind, statische Drehbewegungs- bzw. Stillstandssignale zur Verfügung zu stellen, ohne Umstellung durch lediglich Einstellung von außen eine Anpassung an entsprechend geänderte Bedingungen vorgenommen werden kann. Dies ist insbesondere bei solchen elektrischen Antrieben wesentlich, die als sogenannte hardware-gesteuerte Motoren bezeichnet werden, die also beispielsweise über lediglich Schützansteuerung ihre Antriebsenergie zugeführt erhalten oder abgeschaltet werden. Der Erfindung gelingt es in diesem Fall, zur Erzeugung des statischen L-Signals, welches die redundante Sicherheitsschaltung unbedingt zur zweikanaligen Drehbewegungsauswertung benötigt, die Schaltkontaktgabe eines zusätzlichen Kontaktpaares am Einschaltschutz auszuwerten, und zwar auch dann, wenn beim Ausschalten notgedrungen ein Nachlauf auftritt, der bei sofortiger Reaktion der das L-Signal zur Verfügung stehenden Kontaktgabe ein entsprechend differierendes Signal zur dynamischen Drehzahlabfrage erzeugt.

Ferner ist die Erfindung in der Lage, auch bei solchen Antrieben eine redundante, weil zweikanalige Drehbewegungsauswertung zur Verfügung zu stellen, wenn für die Gewinnung des statischen Signals keine gesonderte Schaltbewegung möglich ist bzw. ausgewertet werden kann. In diesem Fall werden zwei dynamische Sensoren angeordnet und einem dieser Sensoren ein frequenzabhängiger Schalter durch entsprechend geänderte Modulbestückung am Gerät so zugeordnet, daß auch in diesem Fall ein in seinem Sinngehalt dem dynamischen Signal entsprechendes statisches L-Signal erzeugt wird. Das bedeutet, daß dieses für die Redundanz wichtige zweite L-Signal als statisches Signal mit Hilfe eines frequenzabhängigen Schalters erzeugt und dann intern zur Anschlußklemme für das statische L-Signal geführt wird. Beide dynamischen bewegungsabhängigen Signale werden in diesem Fall durch zwei unabhängige Näherungsschalter erzeugt, wobei eine gemeinsam vorhandene Zahnscheibe oder etwas ähnliches vorgesehen sein kann.

Somit ist die statische Signalerzeugung über jeweils separate Modulstecker auch dann möglich, wenn aus der Antriebsmotorregelung kein software-gesteuertes L-Signal ableitbar ist.

Ferner ist ein Sicherheitsrelaiskombinationsbereich vorgesehen, der im Zusammenspiel mit Türpositionsschaltern und Magnetzustandskontakten schließlich einen Freigabepfad für die Ansteuerung des Motors über einen Schütz o. dgl. schaltet.

Sicherheitsrelais werden nur bei Stillstand des überwachten Antriebs aktiviert, wobei durch die interne Reihenschaltung von Arbeitskontakten die erforderliche redundante Auswertung erreicht wird.

Muß mit einer nichtkonstanten Auslaufzeit des Antriebs gerechnet werden, dann empfiehlt es sich, die Ansteuerung über den zweiten digitalen Schalter vorzunehmen, der mit Hilfe eines Steckmoduls die Erzeugung des statischen L-Signals ermöglicht, während bei konstanter Auslaufzeit des Antriebs (z.B. gesteuert über elektronische Bremsgeräte) die nachverzögerte L-Signalansteuerung unter Verwendung eines hardware-gesteuerten L-Signals möglich ist, wobei die dann jeweils notwendige, jedoch bekannte Zeitverzögerung an einem äußeren Steckmodul bestimmt werden kann.

Weitere Ausgestaltungen und Verbesserung der Erfindung sind Gegenstand der Unteransprüche bzw. sind in der Beschreibung erläutert.

Zeichnung

Ausführungsbeispiele der Erfindung sind in der Zeichnung dargestellt und werden in der nachfolgenden Beschreibung näher erläutert. Es zeigen:

Fig. 1    eine Sicherheitsrelaisschaltungskombination mit mehreren Strompfaden, die in Verbindung mit einer elektronischen Steuerschaltung schließlich die Freigabe des Strompfads für das Steuerschütz des Antriebs der Zielanlage ermöglicht;

Fig. 2    schematisiert eine mögliche Ausführungsform der Erfassung von Stillstand und Drehbewegung des Antriebsmotors der Zielanlage mit Hilfe von zwei dynamischen Sensoren und Zuführung zur Sicherheitsüberwachungsvorrichtung;

Fig. 3    eine Darstellung der Fig. 2 vergleichbaren schematischen Anordnung, wobei das statische L-Signal zur redundanten Auswertung hardware-gesteuert durch entsprechende Kontaktgabe des Steuerschützes für den Antriebsmotor gewonnen wird;

Fig. 4    zeigt in Form eines Diagramms Bewegungsnachlauf des Antriebs in Verbindung mit den Schaltstellungen eines Stillstandsmeldungs-Kontaktschalters der elektronischen Überwachungsschaltung;

Fig. 5    zeigt Bewegung und Bewegungsnachlauf in Verbindung mit der Erzeugung eines kontaktgesteuerten statischen L-Signals und dessen Speicherung im Zeitraum des Bewegungsnachlaufs des Antriebs.

Beschreibung der Ausführungsbeispiele

Bevor im folgenden genauer auf die Erfindung eingegangen wird, wird nochmals darauf hingewiesen, daß die Erfindung eine Weiterentwicklung der insbesondere in der EP 0 510 218 A2 sowie in der DE 38 37 218 C2 im einzelnen erläuterten Sicherheitsüberwachungsvorrichtung ist und daher mindestens teilweise deren Grundprinzipien und Rahmenbedingungen ebenfalls aufweist, mit der Möglichkeit, auch aus Gründen der Klarheit, auf eine Erläuterung der Grundfunktion insbesondere des schaltungsmäßigen Aufbaus der zentralen Elektronik bzw. Steuerungsschaltung zu verzichten und auf die genannten Veröffentlichungen zu verweisen, auch hinsichtlich des Offenbarungsgehalts.

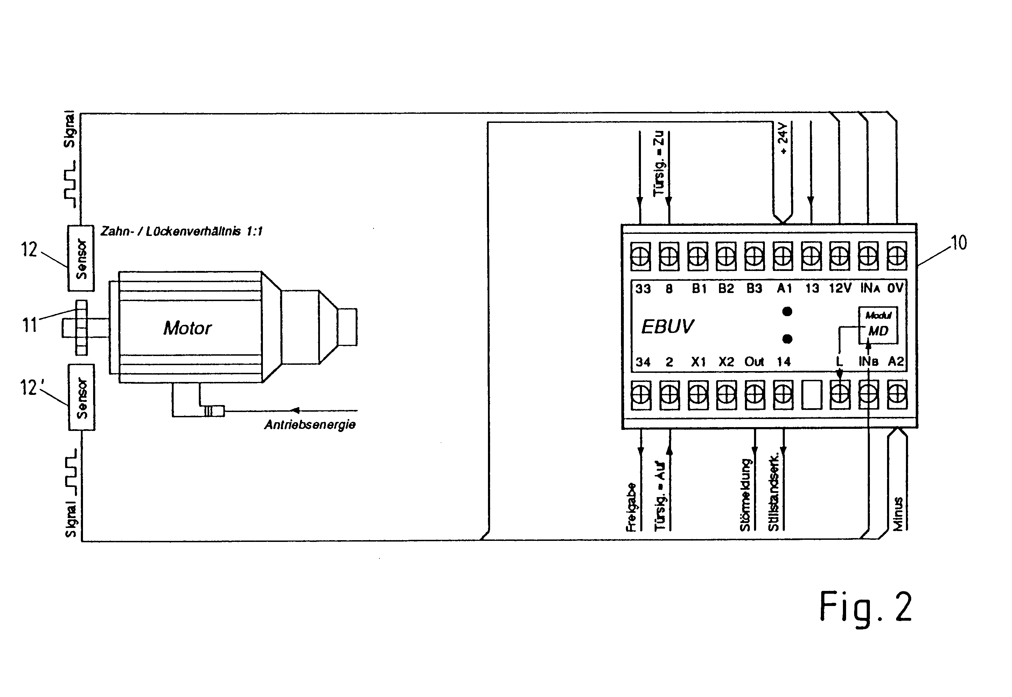

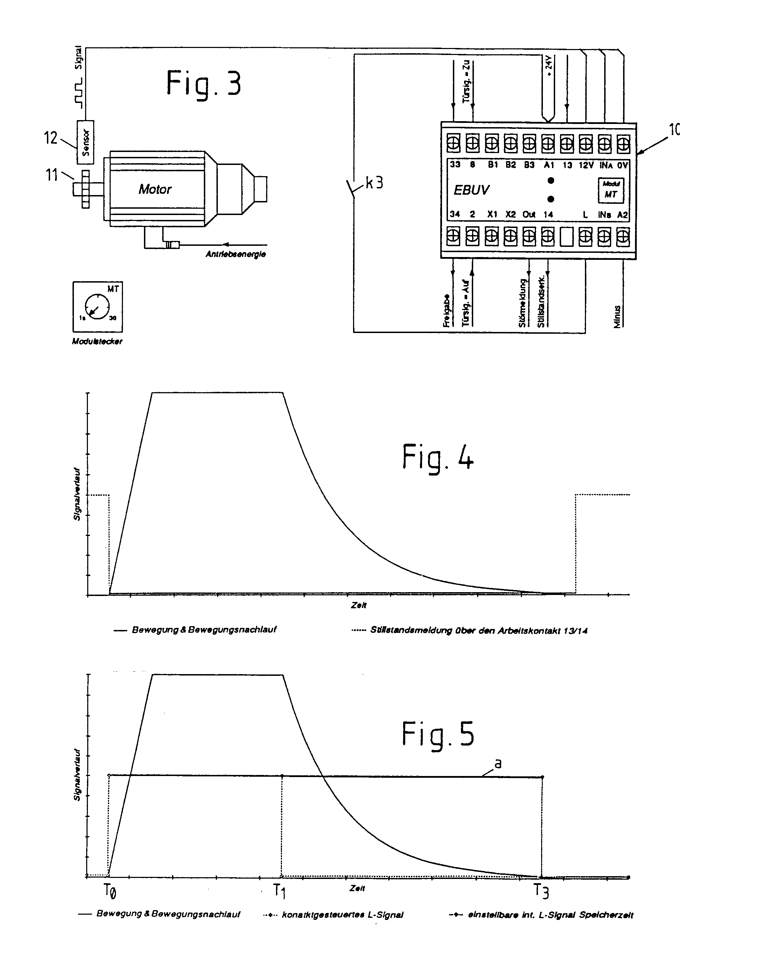

So zeigen die Figuren 2 und 3 schematisiert rechts neben der Zielanlage (Elektromotor einer Antriebseinheit) die Frontansicht einer Sicherheitsüberwachungsvorrichtung 10, die (neben anderen Komponenten) eine Steuerungsschaltung EBUV enthält, wie sie in ihrem grundsätzlichen Aufbau zur Durchführung von redundanten Achskreisüberwachungen insbesondere in der DE 38 37 218 C2 im Grundprinzip erläutert ist. Die Sicherheitsüberwachungsvorrichtung 10 enthält zwei voneinander unabhängige Überwachungssysteme zur redundanten Signalauswertung, was bedeutet, daß eine Drehbewegungsinformation einer jeweiligen Zielanlage unabhängig voneinander zweikanalig zur Verfügung gestellt werden muß.

Dabei wird grundsätzlich so vorgegangen, daß ein erstes Drehbewegungs- bzw. Stillstandssignal durch dynamische Signalansteuerung mittels Abtastung gewonnen wird, und zwar beispielsweise mittels einer mit dem Antrieb gekoppelten Zahnscheibe 11 über einen Sensor 12 (Näherungsschalter), der ein proportional zur Bewegung erzeugtes digitales Signal einem dynamischen Überwachungskanal INA der Steuerungsschaltung EBUV zuführt. Je nach Drehbewegungsfrequenz und Zähneanzahl können verschiedene Geräteausführungen vorgesehen sein.

Das zweite, die redundante Signalauswertung gewährleistende Signal ist bei allen Ausführungsformen ein statisches Signal, welches üblicherweise, nämlich bei besonderen geregelten Motoren aus der Regelung gewonnen wird und welches bei bestimmten Bewegungen der Zielanlage den Wert L = 1 und bei abgeschalteter oder jedenfalls sich im Stillstand befindender Zielanlage den Wert L = 0 aufweist. Dieses L-Signal ist daher insofern ein software-gesteuertes Signal, welches aus der Zielanlagen-Motorregelung abgeleitet ist und beispielsweise von L = 1 auf L = 0 (bedeutet Stillstand der überwachten Achse) wechselt, wenn der entsprechende Motor etwa über seine eigene Antriebsenergie stillgehalten, z.B. elektromagnetisch geklemmt wird.

Viele Motoren sind jedoch hardware-gesteuert, beispielsweise über ein den Motorstrompfad steuerndes Schütz, so daß kein L-Signal zur Verfügung steht, sondern die Schaltstellung des Motorschützes ausgewertet werden muß oder es wird in einer Variante vorgeschlagen, auch die statische L-Signalansteuerung mittels eines Näherungsschalters zu realisieren.

Der Erfindung gelingt es neben der Auswertung eines software-gesteuerten L-Signals aus der Regelungsumgebung der Zielanlage auch die beiden anderen erwähnten Gegebenheiten zu beherrschen, wobei jeweils unterschiedliche Modulstecker MT bzw. MD vorgesehen sind (s. Figuren 2 und 3), durch welche die Art der L-Signalansteuerung ausgewählt werden kann.

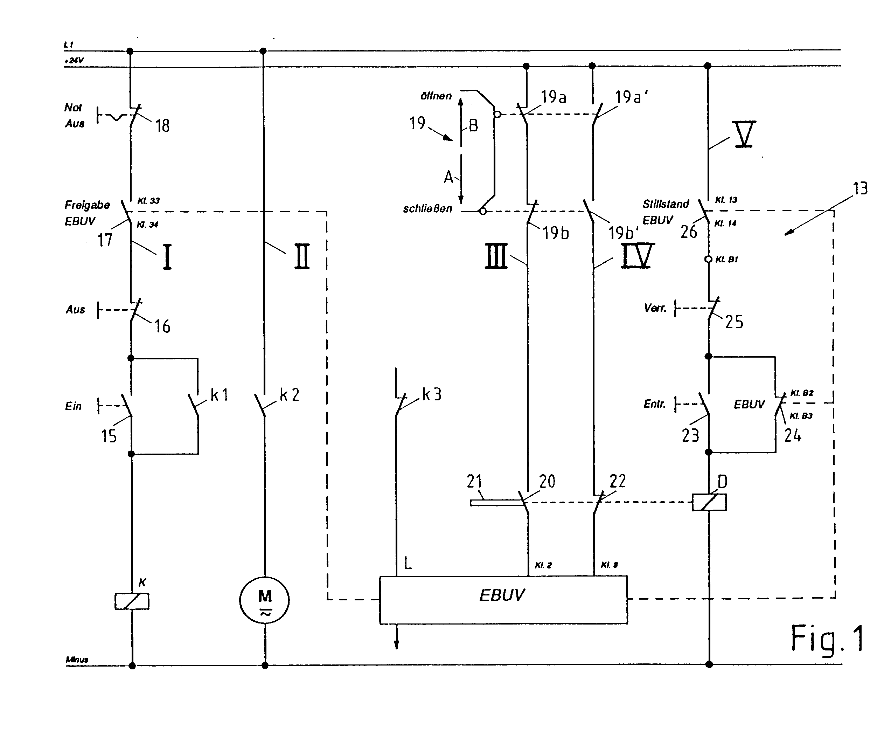

Neben der Elektronik bzw. Steuerungsschaltung EBUV umfaßt die Sicherheitsüberwachungsvorrichtung noch eine Sicherheitsrelaiskombinationsschaltung 13, wie sie in Fig. 1 beispielhaft für den Fall eines hardware-gesteuerten Antriebsmotors der Zielanlage dargestellt ist zur Sicherung der mechanischen Schutzeinrichtung der jeweiligen Maschine. Hierunter ist beispielsweise eine Schutzhaubenverriegelung im Achsantriebsbereich zu verstehen im einfachsten Fall, oder eine Schutztür, die beim Betrieb den Bereich der Maschine, der Bewegungen oder Drehbewegungen unterworfen ist, gegenüber der Umgebung und insofern auch gegenüber dem Bedienungspersonal absperrt oder unter Umständen auch ganze Raumbereiche, die zur Sicherheit durch Türen verschlossen werden.

Zum besseren Verständnis der Erfindung ist es sinnvoll, zunächst anhand der Sicherheitsrelaiskombination 13 der Fig. 1 einen grundsätzlichen Betriebsablauf bei einer redundant sicherheitsüberwachten Maschine zu erläutern.

In Fig. 1 sind, was lediglich beispielhaft zu verstehen ist und die Erfindung nicht einschränkt, fünf Strompfade I bis V dargestellt. Der Stromkreis oder Strompfad I enthält das Steuerschütz K für die Ansteuerung des Motors M, welches in Reihe liegt mit einem EIN-Taster 15 zum Einschalten des Schaltschützes K für den Motor M. Parallel zum EIN-Taster 15 liegt ein Selbsthaltekontakt k1 des Motorschaltschützes K, wie an sich bei einer solchen Konfiguration üblich. In Reihe hierzu schließt sich ein AUS-Schalter 16 an sowie ein Freigabe-Schalter 17, der von der Elektronik EBUV bei Vorliegen bestimmter Sicherheitsbedingungen geschlossen wird, sowie schließlich ein Not-AUS-Schalter 18. Der Versorgungsstrompfad II für den Antriebsmotor enthält lediglich einen Schließer-Relaiskontakt k2 des Motorschaltschützes K.

Bei dem in Fig. 1 dargestellten Ausführungsbeispiel einer Sicherheitsrelaiskombination wird noch ein weiterer Öffner-Schaltkontakt k3 des Motorschaltschützes K ausgenutzt zur Bereitstellung des statischen L-Signals für die Stillstandsüberwachung - hierauf wird weiter unten noch eingegangen. Der Strompfad III stellt einen vorbereitenden Signalpfad für die Elektronik oder Steuerschaltung EBUV dar und ist mit deren Eingangsklemme Kl2 verbunden; in diesem Stromkreis liegen bei geöffneter Schutzeinrichtung 19 (beispielsweise also Schutzhaube, Tür o. dgl.) geschlossene Schaltkontakte 19a und 19b in Reihe mit einem Schließerkontakt 20 eines Verriegelungsmagneten D (im Stromkreis V), wobei der Verriegelungsmagnet D mit diesem Schaltkontakt 20 gleichzeitig auch noch eine sonstige mechanische Verriegelungsanordnung, etwa eine Schaltstange 21, einen Riegel, ein Sperrglied oder ein sonstiges Teil bewegt, welches mechanisch in den Bereich der Schutzeinrichtung oder Tür 19 gehört und im "aktivierten" Zustand ein Öffnen der Tür verhindert und im "entriegelten" Zustand den Zugang zu den sich bewegenden Teilen der redundant sicherheitsüberwachten Maschine ermöglicht. An den Vorbereitungsschaltkreis, der eine Bestromung, also ein 1-Signal an Klemme 2 erforderlich macht, vorbereitend zur Freigabe der Inbetriebnahme durch die EBUV schließt sich der Sicherheitsstrompfad IV an, der in Reihe geschaltet Schließerkontakte 19a', 19b' der Schutzeinrichtung enthält, die bei Überführen der Schutzeinrichtung in den geschlossenen Zustand ebenfalls schließen sowie einen weiteren Verriegelungsmagnet-Schaltkontakt 22 als Öffner.

Der Stromkreis V dient der Schaltung des Verriegelungsmagneten D und enthält in Reihe mit dem Verriegelungsmagneten D einen Entriegelungs-Taster 23, der bei Betätigung schließt, parallel zu einem von der Elektronik EBUV gesteuerten Schaltkontakt 24 (Kl. B2/Kl. B3).

In Reihe geschaltet im Strompfad V liegt ferner ein Verriegelungstaster 25, der bei Betätigung öffnet sowie ein von der EBUV geschalteter Stillstands-Schaltkontakt 26, der geschlossen ist, wenn **beide** Drehbewegungs- bzw. Stillstandssensoren den Stillstand der zu überwachenden Anlage signalisieren, der also bei Bewegung öffnet und im übrigen auch separat herausgeführte Klemmen Kl13 und Kl14 an der Frontfläche der Sicherheitsüberwachungsvorrichtung 10 umfaßt, so daß das an diesen Klemmen Kl13 und Kl14 auftretende Stillstands-Signal auch anderweitig Verwendung finden kann.

Die Wirkungsweise der Sicherheitsrelaiskombination der Fig. 1 ist dann wie folgt.

Um eine (erneute) Inbetriebnahme zu ermöglichen, stellt die EBUV zunächst durch Auswerten der an ihren-Eingängen INA (dynamisches Signal) und L(statisches Signal) fest, daß die Zielanlage zum Stillstand gekommen ist, woraufhin der Stillstands-Schalter 26 von der EBUV geschlossen wird (Kl13/Kl14), so daß bei von der EBUV geschlossen gehaltenem Schalter 24 (Kl B2/Kl B3) parallel zur Entriegelungstaste 23 der Verriegelungsmagnet D aktiviert wird. Der Verriegelungsmagnet D schließt dann seinen Kontaktschalter 20 und bringt gleichzeitig seine Verriegelungsstange 21 (oder irgendeine andere Verriegelungs- oder Sperranordnung) in den entriegelten Zustand für die Tür 19, die sich in der dargestellten Position im geöffneten Zustand befindet bei geschlossenen Türschaltern 19a, 19b. Hierdurch ergibt sich eine vorbereitende Ansteuerung des Vorbereitungsstrompfads III und das sich an Eingangsklemme Kl2 der EBUV ergebende Signal dient als erstes Vorbereitungssicherungssignal der Freigabe der Antriebsenergiezuschaltung.

Anschließend wird die Bedienungsperson die Tür 19 schließen, woraufhin die Schalter 19a', 19b' schließen und die Türschalter 19a, 19b öffnen, so daß das vorbereitende Sicherheitssignal von Klemme 2 der EBUV ordnungsgemäß weggenommen wird. Nach dem Schließen drückt die Bedienungsperson den Verriegelungstaster 25 und öffnet den Strompfad V für den Verriegelungsmagneten D, der daraufhin in die in der Fig. 1 dargestellte stromlose Schaltposition übergeht, also Relaisschalter 22 geschlossen, Relaisschalter 20 geöffnet und Verriegelungselement 21 im verriegelten Zustand, so daß nunmehr die Tür 19 nicht mehr geöffnet werden kann. Gleichzeitig ergibt sich hierdurch an der Eingangsklemme Kl8 der EBUV ein entsprechendes, in diesem Fall hochliegendes Signal, so daß die EBUV nunmehr ihren Freigabe-Schalter 17 (Kl33/Kl34) schließt (Stromkreis I).

5

Die Bedienungsperson kann jetzt den EIN-Taster 15 schließen; das Motorschaltschütz K zieht an, hält den Stromkreis auch nach späterem Öffnen des EIN-Tasters 15 über seinen Selbsthaltekontakt k1 geschlossen und die Maschine läuft an. Über die von der EBUV erkannte Antriebsbewegung (Stillstandserkennung) wird der Arbeitskontakt entsprechend Stillstandsschalter 26 (Kl13/Kl14) geöffnet. Durch diese Maßnahme wird eine Entriegelung sicher verhindert.

Erst nach späterem Erreichen des Maschinenstillstands wird durch Schließen des Stillstandsarbeitskontaktes 26 die Entriegelung vorbereitet, woraufhin dann bei Betätigung des Entriegelungs-Kontakts 23 der Verriegelungsmagnet D wieder bestromt wird und das Verriegelungselement 21 zur Türöffnung zurückzieht, gleichzeitig seinen Schaltkontakt 20 schließt und durch das Öffnen der Tür 19 dann auch bei deren Bewegung in Richtung des Pfeils B die Kontakte 19a, 19b wieder geschlossen werden, so daß der Vorbereitungspfad erneut aktiviert ist.

Erkennbar benötigt in diesem Zusammenhang zur Schaltung ihrer EBUV-Kontakte (Freigabeschalter 17 bzw. Stillstandsschalter 26) die EBUV neben dem dynamischen Signal am Eingang INA vom Näherungsschalter 12 (vgl. Fig. 3) ein in gleicher Weise auswertbares statisches Signal, welches zeitgleich mit der Drehbewegungsentstehung von dem weiter vorn schon erwähnten Arbeitskontakt k3 (in Fig. 3 nochmals gezeichnet) des Antriebsmotorschützes K als Gleichspannungssignal dem statischen Überwachungskanal entsprechend Eingangsklemme L zugeführt wird.

Andererseits entsteht jedoch bei Abschaltung des Antriebs ein Bewegungsnachlauf in Abhängigkeit zur Masse, wie der Kurvenverlauf der Fig. 5 zeigt, der in durchgezogener Linienführung die Bewegung und den Bewegungsnachlauf angibt, wenn zum Zeitpunkt To eingeschaltet und zum Zeitpunkt T1 abgeschaltet wird. Gestrichelt ist der Signalverlauf eines kontaktgesteuerten L-Signals angegeben, und man erkennt, daß dieses Signal zum Zeitpunkt T1 verschwindet, während das mit Hilfe des dynamischen Sensors erzeugte dynamische Signal praktisch erst zum Zeitpunkt T3, also bei tatsächlichem Maschinenstillstand, verschwindet. Diese Diskrepanz wird von der EBUV als Störung interpretiert (die beiden die Redundanz sicherstellenden Drehbewegungs- bzw. Stillstands-Erkennungssignale stimmen nicht mehr überein), was dazu führt, daß die EBUV intern in einen verriegelten Zustand übergeht und der Stillstands-Schaltkontakt 26 nicht mehr geschlossen wird, und zwar bei keiner von außen anstehenden möglichen Signalkombination. Gleichzeitig ergibt sich am Ausgangsanschluß Out eine Störungsmeldung, die beispielsweise auch über eine Großlichtanzeige realisiert werden kann. Eine Quittierung ist nur durch Abschalten der gesamten Anlage und erneuter Inbetriebnahme möglich, da sich die Schutzeinrichtung (Tür 19) sonst auf keinen Fall mehr öffnen läßt.

Die Erfindung sieht daher vor, daß bei Abschaltung des Antriebs eine Speicherung des statischen Signals erfolgt über den Zeitpunkt der Abschaltung hinaus für die Zeitdauer T3-T1 entsprechend Fig. 5, was mit anderen Worten bedeutet, daß für eine einstellbare Zeitdauer (in Abhängigkeit zur Masse des Antriebs oder sonstiger, einen Bewegungsnachlauf beeinflussenden Faktoren) das L-Signal gegenüber der EBUV sozusagen virtuell aufrecht erhalten wird entsprechend dem Kurvenverlauf a zum Zeitpunkt T1 zum Zeitpunkt T3, was der einstellbaren internen L-Signal-Speicherzeit entspricht. Eine solche Funktion wird geräteintern durch einen von außen mit dem Gerät der Sicherheitsüberwachungsvorrichtung verbindbaren Modulstecker MT gewährleistet, s. Fig. 3 , in welcher der Modulstecker MT links unten klein herausgezeichnet ist und auch angibt, daß beispielsweise eine Nachlaufzeitdauer zwischen 1 Sekunde und 30 Sekunden eingestellt werden kann. Diese Möglichkeit ist in den meisten Fällen hinreichend, weil sich durch entsprechende Bremseinrichtungen konstante Bewegungsnachlaufzeiten ergeben.

Schließlich ist die Sicherheitsüberwachungsvorrichtung im Bereich ihrer Steuerschaltung so universell einsetzbar, daß auch dann, wenn weder ein software-abgeleitetes L-Signal noch ein hardware-abgeleitetes L-Signal zur Verfügung stehen, mit Hilfe eines weiteren, an der gleichen Stelle einsetzbarem Moduls MD (Fig.2) die redundante Zweikanaligkeit aufrecht erhalten werden kann, indem ein zweiter dynamischer Sensor 12' eingesetzt wird, der ein drehzahlabhängiges Frequenzsignal dem Eingang INB zuführt, wobei dieses Signal geräteintern unter Benutzung einer geänderten äußeren Steckbeschaltung durch den Modulstecker MD (vgl. Fig.2) mittels eines frequenzabhängigen Schalters in ein statisches L-Signal umgewandelt wird. Der frequenzabhängige Schalter ist so ausgebildet, daß er der EBUV ab einer gewissen Impulszahl pro Zeiteinheit ein statisches L-Signal L = 1, unterhalb einer vorgegebenen Impulszahl ein statisches L-Signal L = 0 vermittelt.

Es ist daher möglich, durch ledigliches Einstecken bzw. Umstecken eines Modulsteckers MT bzw. MD die Sicherheitsüberwachungsschaltung an unterschiedliche Gegebenheiten äußerer Antriebssysteme anzupassen, bei Aufrechterhaltung der redundanten Signalauswertung und ohne daß die Gefahr besteht, daß es zu unerwarteten Störungsmeldungen kommt.

Vergleicht man die Darstellung der Figuren 2 und 3, dann erkennt man, daß die äußere Klemmenbeschriftung der EBUV-Elektronik den in Verbindung mit der Erläuterung der Sicherheitsrelaiskombination der Fig. 1 erwähnten Schaltkontakten entspricht bzw. sich dort wiederfindet, wobei mit den Anschlußklemmen X1, X2 eine zusätzliche Kontaktvervielfältigungsüberwachung der verschiedenen Folgeansteuerungsvorgänge der Sicherheitsrelaiskombination der Fig. 1 möglich ist. Beispielsweise können mit den Anschlußklemmen X1 und X2 weitere Kontakte des Antriebsschützes K verbunden werden.

Entsprechend Fig. 4 ergibt sich daher die Stillstandsmeldung über den Arbeitskontaktschalter 26 (Kl13/Kl14) präzise in Abstimmung zur Bewegung und dem Bewegungsnachlauf der überwachten Anlage.

Zusammengefaßt: Bei offener Schutzeinrichtung, beispielsweise Tür 19, und aktiviertem Verriegelungsmagnetsystem D gelangt ein Vorbereitungs-Gleichspannungssignal an die Anschlußklemme Kl2, wodurch die Möglichkeit einer Folgeansteuerung geräteintern an der Anschlußklemme Kl8 vorbereitet wird. Nach Schließen der Schutzeinrichtung wird zwangsläufig über die Türkontakte 19a, 19b; 19a', 19b' die seitherige Ansteuerung unterbrochen und erst durch den elektromechanischen Verriegelungsvorgang mittels Verriegelungsmagnet D wird der Anschlußklemme Kl8 der EBUV ein entsprechendes (Gleichspannungs)Signal zugeführt. Bei fehlerfreier, geräteinterner Funktion wird durch diese Ansteuerung der Strompfad für das Steuerschütz K für den Motor über die Anschlußklemmen Kl33, Kl34 aktiviert. Dieser Zustand bleibt bis zum Entriegelungsvorgang bestehen. Ein erneutes Freigabesignal kann nur dann erreicht werden, wenn der Ablauf wie soeben beschrieben durchgeführt wird.

Die Schutzeinrichtung signalisiert daher über relevante Kontaktansteuerung folgende Zustände:
Sicherheitsschutzeinrichtung geöffnet - Verriegelung deaktiviert
Sicherheitsschutzeinrichtung geschlossen - Verriegelung aktiviert.

Durch die Sicherheitsrelaiskombination der Fig. 1 wird dieser Betriebszustand in der Abfolge wie folgt ausgewertet:
Der Strompfad I (Freigabepfad) für das Schütz K ist deaktiviert - keine Antriebszuschaltung möglich
Der Strompfad I ist aktiviert - Antriebszuschaltung möglich.

Nur durch fehlerfreie Ansteuerung über die Schutztürpositionsschalter sowie die Funktion des Verriegelungsmagneten in Verbindung mit dem beherrschenden Steuerungsverhalten der EBUV ist daher eine Aktivierung des Schutzstrompfades I möglich.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen sowie den Hauptanspruch in seinem Merkmalsgehalt zu reduzieren.

Zur Abrundung der Offenbarung sind ferner noch beigefügt:
- die ursprünglich eingereichten Seiten mit den ursprünglich eingereichten Zeichnungsseiten 29 bis 34 (frequenzabhängiger Schalter), sowie
- die ursprünglich eingereichten Seiten 35 bis 44 (Kombination mit System).

## *Überwachungssystem EBUV*

### *1.0. Einleitung*

*Die Einheit (**EBUV**) beinhaltet zwei voneinander unabhängige Überwachungssysteme.*
*Die Stillstands— und Drehbewegungserkennung dient für die sichere Stillstandsmeldung. Die Sicherheitsrelaiskombination wird zur Auswertung der Türpositionsschalter sowie der Magnetzustandskontakte benötigt.*
*Beide Systeme werden gemeinsam über einen Betriebsspannungsanschluß versorgt, und können bei externer Beschaltung den Anforderungen der erhöhten Sicherheit erfüllen.*

### *1.1. Stillstands— und Drehbewegungserkennung (EBUV)*

*(Schematic: EBUV — R, EBUV — A, EBUV — N, EBUV — Z, EBUV — MT, EBUV — L)*

*Die Einheit beinhaltet einen zweikanalig arbeitenden Achskreis. Jeder Kanal hat eine eigene Stillstands— und Drehbewegungserkennung (RAA/RAB) und ist über eigene unabhängige Parameter festgelegt (Quarz). Die Stillstands— und Drehbewegungserkennung (RAA/RAB) wie über die Sicherheitsausgangsrelais durch die Kontaktsysteme (Anschlußklemme ⟨13/14⟩) zur Verfügung gestellt.*
*Für den Achskreis ist ein dynamisches Signal (Anschlußklemme ⟨IN$_A$⟩), proportional zur Drehbewegung, sowie die Bestätigung einer solchen durch ein statisches Signal (Anschlußklemme ⟨L⟩) in "0"*

bzw. "1" notwendig. Der statische Signalinhalt kann durch eine entsprechende Einrichtung bis zu 10s nach Abschaltung gespeichert werden (Abschaltverzögerung). Durch diese Maßnahme wird die redundante Funktion des Achskreises sicher gestellt.

Für die statische Signalansteuerung ist noch eine zweite Möglichkeit vorgesehen. Über ein zusätzliches dynamisches Signal (Anschlußklemme $\langle IN_B \rangle$), proportional zur Drehbewegung wird das statische Signal über einen frequenzabhängigen Schalter erzeugt und intern zur Anschlußklemme $\langle L \rangle$ geführt. Beide dynamische bewegungsabhängige Signale müssen durch zwei unabhängige zwar über eine gemeinsam vorhandene Zahnscheibe oder ähnlich erzeugt werden.

Über zwei separate Modulstecker wird die Möglichkeit der statischen Signalerzeugung vorbereitet, wobei aber immer nur eine zur Anwendung kommt.

Des Weiteren enthält die Einheit ein Sicherheitsrelaiskombinationsteil (Anschlußklemme $\langle 2 \rangle$ und $\langle 8/9 \rangle$) für die fehlerfreie Auswertung des externen elektromechanischen Verriegelungsmoduls. Aus dem fehlerfreien Zusammenspiel der Türpositionsschalter und der Magnetzustandskontakte wird anschließend ein Freigabepfad (Anschlußklemme $\langle 33/34 \rangle$) zur Verfügung gestellt.

Wird die Stillstandserkennung (Anschlußklemme $\langle 13/14 \rangle$) auf das Sicherheitsrelaiskombinationsteil (Anschlußklemme $\langle B1 \rangle$) geführt, ist sichergestellt, daß der Arbeitsraum des überwachenden Antriebs erst nach erreichen des Stillstandes geöffnet werden kann.

**Funktionsart EBUV**

### 2.1. Stillstandserkennung

Das Überwachungssystem verfügt über eine Stillstands- und Drehbewegungserkennung sowie über eine Sicherheitsrelaiskombination.

Durch Festlegung einer Drehbewegungsrampe (50–140U/min) wird der zweikanalige Achskreis, unabhängig voneinander, auf redundante Funktion geprüft. Bauteilfehler bzw. Funktionsfehler in einem der beiden Kanäle würden unmittelbar eine sofortige Störung verursachen, und somit keine Stillstandserkennung zur Folge haben. Ebenso würde bei Überschreitung einer zulässigen Drehtbewegung eine sofortige Störung auslösen.

Die Festsetzung der Rampe wird automatisch nach ca. 3000ms mit der Stillstandserkennung unabhängig voneinander, redundant aktiviert.

Erst bei Stillstand der überwachten Achse werden die internen Sicherheitsausgangsrelais über die Stillstandserkennung aktiviert. Dieser Vorgang wird nur bei fehlerfreier Ansteuerung bzw. fehlerfreien Kontaktzuständen der Relais durchgeführt.

Die Parametrierung der Drehbewegungserkennung wird durch zwei Geräteoptionen festgelegt, die über unterschiedliche Frequenz- bzw. Drehbewegungsbereiche verfügen. Erkennung des Stillstandes ist von der Bewegungsauflösung (Zähne bzw. Impulse pro Umdrehung) wie folgt abhängig:

| Optionen: | Zähnezahl | n = 0 | Drehbewegung |
|---|---|---|---|
| EBUV / 06 = | von 03 Impulse / Umdr. bis 09 Impulse / Umdr. | = <7,0 U/min = >2,0 U/min | max. 18000 U/min max. 6000 U/min |
| EBUV / 12 = | von 06 Impulse / Umdr. bis 18 Impulse / Umdr. | = <3,5 U/min = >1,0 U/min | max. 18000 U/min max. 6000 U/min |

### 2.2 Sicherheitsrelaiskombination

Das Sicherheitsrelaiskombinationsteil signalisiert über relevante (zwangsunterbrechende) Kontakte folgende Zustände:

a.) Sicherheitseinrichtung geschlossen (Verriegelung aktiviert) !

b.) Sicherheitseinrichtung geöffnet (Verriegelung deaktiviert) !

Dieser Funktionszustand wird durch das Sicherheitsrelaiskombinationsteil wie folgt ausgewertet:

a.) Freigabepfad für weitere externe Ansteuerung aktiviert Einschaltvoraussetzung für den Antriebsschütz

b.) Freigabepfad deaktiviert

Nur bei fehlerfreier Ansteuerung bzw. fehlerfreien Auswertung der Türpositionsschalter sowie der Kontaktzuständen des Verriegelungsmoduls bzw. des Sicherheitsrelaiskombinationsteils wird eine Aktivierung des Freigabepfades und somit eine Zuschaltmöglichkeit des Antriebsschützes ermöglicht. Bei entsprechender Kombination der Stillstandserkennung, Sicherheitsrelaiskombinationsteil und Verriegelungsmodul wird erreicht, daß der Arbeitsraum (Schutztür) erst nach erreichen des Stillstandes des zu überwachenden Antriebs geöffnet (Entriegelung) werden kann.

**Funktionsbeschreibung EBUV**

### 3.1. Schematic: EBUV−N/EBUV−A

Beilnbetriebnahme des Gerätes über die Anschlußklemmen ⟨A1/A2⟩, wird die Betriebsspannungsversorgung für die Übertrager ÜA1/ÜA2 reziprok über die Ruhekontakte ⟨11/12⟩ der Sicherheitsausgangsrelais KA1/KA2 zur Verfügung gestellt. Bei beidseitiger, dynamischer Relaisansteuerung RAA/RAB der Transistoren TA1/TA2 bzw. TB1/TB2 wird jeweils die Erregerspannung der Sicherheitsausgangsrelais KA1 bzw. KB1 erzeugt. Durch den daraus folgenden, gleichzeitigen Kontaktwechsel der Sicherheitsausgangsrelais, wird die Betriebsspannung jeweils über den eigenen Arbeiskontakt ⟨11/14⟩ sowie RA6/RB6 garantiert. Die durch den Kontaktwechsel entstehende Umschlagszeit wird über die Kondensatoren CA1 bzw. CB1 überbrückt.
Durch diese redundante Funktion wird eine sichere gegenseitige Kontaktzustandsüberwachung gewährleistet.
Die Rückfallzeit der Sicherheitsausgangsrelais wird mit den Kondensatoren CA2 bzw. CB2 auf kleiner 20ms festgelegt.
Die globale Betriebsspannung für alle nachfolgende Elektronik wird über den Festspannungsregler ICN1 auf +12V festgelegt und über eine Schnittstelle zur Verfügung gestellt.

### 3.2. Schematic: EBUV−R/EBUV−A

Diese Sicherheitsrelaiskombination stellt bereits eine anerkannte relevante Verknüpfung von zwangsgeführten Kontakten dar, die für die Auswertung von Schutztürpositionsschaltern auch im Zusammenhang mit Verriegelungsmodule verwendet wird.
Bei Ansteuerung über die Schutztürpositionsschalter bzw. der Verriegelungseinheit an der Anschlußklemme ⟨2⟩ wird bei fehlerfreien Kontaktzuständen der Sicherheitsrelais K2/K3 eine Aktivierung des Sicherheitsrelais K1 erreicht und zur Selbsthaltung gebracht. Dadurch wird die Ansteuerung über die Anschlußklemme ⟨8/9⟩ erst vorbereitet und ermöglicht. Erfolgt diese Ansteuerung über die Schutztürpositionsschalter bzw. der Verriegelungseinheit an der Anschlußklemme ⟨8/9⟩ werden die Sicherheitsrelais K2/K3 aktiviert, und eine Selbsthaltung über die Ansteuerspannung ermöglicht. K1 wird durch diesen Vorgang deaktiviert und der Freigabepfad ⟨33/34⟩ geschlossen. Bei Wegnahme der Ansteuerung über die Schutztürpositionsschalter bzw. der Verriegelungseinheit an der Anschlußklemme ⟨8/9⟩ wird der Freigabepfad durch Deaktivierung der Sicherheitsrelais K2/K3 geöffnet. Außerdem wird die Ansteuerung über die Anschlußklemme ⟨2⟩ zur Aktivierung des Sicherheitsrelais K1 wieder vorbereitet.
Zur Erhöhung der Sicherheit kann die erneute Aktivierung des Sicherheitsrelais K1 über die an den Klemmen ⟨X1/X2⟩ angeschlossene Ruhekontakte des Antriebsschützes (Kontaktvervielfältgung) erfolgen.
Damit die Aktivierung der Sicherheitsrelais K2/K3 und der daraus folgende Deaktivierung K1 (Kontaktumschlagszeit) zu keiner Störung führt wird die Abfallzeit des Sicherheitsrelais K1 über den Kondensator verlängert.
Das bedeutet, daß nur bei fehlerfreier Ansteuerung über die Anschlußklemmen ⟨2⟩ sowie ⟨8/9⟩ der Schutztürpositionsschalter bzw. der Verriegelungsmodul und natürlich auch eine fehlerfreie Funktion der Sicherheitsrelaiskombination der Arbeitskontaktkreis (Freigabepfad) über die Anschlußklemmen ⟨33/34⟩ aktiviert wird. Dieser Arbeitskontaktkreis wird extern schaltungstechnisch so verknüpft, daß nur bei Aktivierung eine Zuschaltmöglichkeit des Antriebes zulässig wird.

### 3.3. Schematic: EBUV−L/EBUV−A (Hybrid, EHS 9111)

Durch das anstehende, digitale, drehbewegungsabhängige Signal an der Anschlußklemme ⟨IN_A⟩, wird über den Optokoppler OKA1, das Gatter N.G.1 und N.G.2 über CA4 so angesteuert, daß an dessen Ausgang ein digitaler, positiver Impuls von ca. 15μs entsteht. Mit diesem Impuls wird der

*Teiler ICA2 und ICA3 getriggert. Zusätzlich wird der Impuls dem Hybrid am Anschlußpunkt S1/A (f=ist) zugeführt. Die Referenzfrequenz wird über ICA1, RA14, RA15 und dem Quarz QA1 erzeugt. Diese wird über den Teiler ICA1, ICA2 Ausgang Q5 dem elektronischen Umschalter ICA4/B als Sollreferenzfrequenz (f=soll) für die Drehbewegungsmessung zugeführt. Ebenso wird auch die entsprechende Rampenreferenzfrequenz (f=rampe) über ICA1, ICA2 Ausgang Q12 dem elektronischen Umschalter ICA4/B zur Verfügung gestellt. Über den Ausgang von ICA4/B wird die entsprechende Referenzfrequenz dem Hybrid am Anschlußpunkt C2/A sowie über den Teiler ICA3 Ausgang Q1 dem elektronischen Umschalter (Inverterfunktion) ICA4/A am Anschlußpunkt R1/A zugeführt. Zusätzlich wird eine Meßfrequenz für die Referenzdifferenzmessung über ICA2 Ausgang Q10 dem Hybrid Anschlußpunkt C2/B bereitgestellt.*

*Über das Signal Hybrid Anschlußpunkt O2/A wird der Reset (RL≈1ms) durch CA9, RA19, INV.3 und DA1 für die L−Signalprüfung gebildet. Über das Signal Hybrid Anschlußpunkt O4/A wird der Reset (RR≈3ms) durch CA7, RA17, INV.1, CA8, RA18, INV.2 und DA2 für die Referenzdifferenzmeßung erzeugt. Zudem wird die Umschaltung ICA4/B aktiviert, damit das Referenzsignal für die Drehbewegungsmeßung am Anschlußpunkt R1/A (f=soll) zur Verfügung steht.*

*Bei Aktivierung des Optokopplers OK1/1 wird das Gatter N.G.4 über N.G.3 freigeschaltet, damit über die am Hybrid Anschlußpunkt O3/A anliegende Frequenz (2750Hz), die L−Signalprüfung ausgelöst werden kann.*

*Das dynamische Relaisansteuersignal Schnittstelle RAE wird über INV.4 dem Hybrid C1/A sowie dem Driver1 zugeführt. Ein dynamisches Ausgangssignal am Driver1 kann nur dann entstehen, wenn über das Hybrid Anschlußpunkt O1/A, RA9 ein Signal (Drehbewegungserkennung) zur Verfügung steht. Ebenso kann durch nachfolgende Ansteuerung am Ausgang des Drivers2 nur dann ein dynamisches Signal entstehen, wenn über das Hybrid am Anschlußpunkt ZU/A, RA10 ein Signal (Stillstandserkennung) zur Verfügung steht. Anschließend wird das dynamische Signal zur Relaisansteuerung über CA10, RA32 und dem INV.5 an der Schnittstelle RAA bereitgestellt.*

*Die Gatter N.G.5−8 haben die Aufgabe die Resetzeit (≈1,0 bzw. 0,1ms) für die L−Signalprüfung über RA21, RA20, TA1 so zu beeinflussen, daß während der Resetzeit kein Drehbewegungsimpuls für die Drehbewegungsmeßung beseitigt wird.*

**(Hybrid, EHS 9111)**

*Beide Signale (drehbewegungsabhängige Impulse sowie Referenzfrequenzen) werden anschließend im Hybrid über ein Flip−Flop ICA2/A, OR.1 so bewertet, daß dann eine Signalzustandsänderung am Ausgang des Gatters N.G.1 entsteht, wenn die Referenzfrequenz, bedingt durch die zuvor beschriebene Triggerung ausbleibt (Überschreitung der zulässigen Rampen− bzw. Drehbewegung). Gleichzeitig wird der Signalzustand am Anschlußpunkt O1/A als Speicherhilfe für die Ursache der Elektronik zur Verfügung gestellt. Diese Änderung wird über DA9, CA7 und INV.2 gespeichert. Das inverierte Signal über INV.2 wird dem Gatter INV.3, INV.4 über CB2 und CB3 zugeführt. Der darausentstehende negative Impuls (≈3ms) verursacht eine Ausgangssignaländerung der Flip−Flop's ICA2/B und ICA2/C, wodurch die Frequenz für die L−Signalprüfung über DA3, RA3 unterbrochen wird. Vorausgesetzt wird, daß im B−Kanal innerhalb der Resetvorbereitungszeit (≈1ms) der gleiche Prozeß abläuft damit kein einseitiger Signalzustand entsteht. Das Ausgangssignal ICA2/C sowie ICA2/B wird der Elektronik über den Anschlußpunkt O2/A und ZU/A zur Reseterzeugung (RL) und Stillstandserkennung zugeführt, sowie als Freigabe über OR.2 am Flip−Flop ICA2/D verwendet. Durch den in der Elektronik erzeugten Resetimpuls (RL) über den Anschlußpunkt R1/A wird der Flip− Flop ICA2/A sowie das Gatter N.G.1 und INV.2 zurückgesetzt. Zudem wird über RA4 das Gatter N.G.4 zur Prüfimpulserzeugung vorbereitet. Jeder positive Anstieg am Eingang−2 des Gatters N.G.4 erzeugt, für die Zeit einer wirksamen "1" am Eingang−1 des selben Gatters, über INV.6 einen positiven Prüfimpuls von ca. 200μs. Der vom B−Kanal erzeugte Testimpuls wird über das Gatter OR.1 dem A−Kanal zugeführt.*

*Durch eine erneute Ausgangssignaländerung am INV.2 bedingt durch die Drehbewegungsrampenprüfung über die Prüfimpulserzeugung wird wiederrum ein negativer Impuls erzeugt, der nur bei gleichem Funktionsablauf im B−Kanal über das Gatter N.G.2 den Ausgangszustand des Flip−Flop's ICA2/D verändert. Für diese Funktion wird nur eine Differenzzeit von 3ms eingeräumt. Über diese Änderung kann ein erneuter Resetimpuls (RR) in der Elektronik erzeugt werden, der das Flip−Flop sowie die Gatter N.G.1 und INV.2 wieder zurücksetzt. Zudem wird der elektronische Schalter aktiviert wonach dann die Referenzfrequenz (f=soll) am Flip−Flop ICA2/A zur Verfügung steht.*

*Eine Triggerung über die Drehbewegung des Teilers ICA1 wird über den Anschlußpunkt S1/A, RA5*

und TA1 vorgenommen. Des Weiteren ist eine Ausgangszustandsänderung bei ICA1 an Q14 nur dann möglich, wenn die Clockansteuerung über Anschlußpunkt C1/A vorliegt. Das Ausgangssignal ICA1, Q14 dient dazu, daß der Flip–Flop ICA2/B über ICA6 neu gesetzt wird. Dadurch wird wie bereits aufgeführt, die Clockfrequenz über RA3 am Anschlußpunkt O3/A zur L–Signalprüfung sowie die Stillstandserkennung am Anschlußpunkt ZU/A bereitgestellt.

### 3.4. Schematic: EBUV–MT/(EBUV–L)

### (Modulstecker Option MT)

Bei Inbetriebnahme des Modulsteckers **MT** wird über R1, C1–2 und dem Gatter IC2 ein negativer Impuls (≈100ms) erzeugt. Dieser Impuls dient dazu beim Teiler und Oszillator IC1 das Teilungsverhältnis kurzzeitig zu verändern. Das bedeutet, daß der Ausgang IC1 Q nach ca. 50ms auf Signalzustand "1" geht. Erst bei Ansteuerung des L–Signals über (R3, R4 und OK1) wird der über die Schnittstelle ST1 verbundene Reseteingang des Teilen und Oszillators IC1 aktiviert. Dadurch ändert der Ausgang IC1 Q seinen Signalzustand auf "0" und führt über R3, T1 und ST1 den Optokopplern (OK1/1 und OK1/2) ein Signal zu. Erst nach Aufhebung der L–Signalansteuerung ändert sich das Signal am Reseteingang von IC,1 wodurch eine vom Oszillator abhängig einstellbare Zeitverzögerung am Ausgang Q aktiv wird. Nach Zeitablauf wird diese Aktivierung über die Ansteuerung T1 am Optokoppler (OK1/1 und OK1/2) unterbrochen.
Die Zeitverzögerung wird über die Bauteile R4, C3, R5 und P1 bestimmt. Über P1 ist ein Bereichseinstellung von 1...30s vorgesehen.

### 3.5. Schematic: EBUV–Z/(EBUV–L)

### (Modulstecker MD)

Durch ein zweites, digitales, drehbewegungsabhängiges Signal an der Anschlußklemme ⟨IN$_B$⟩, wird über den Optokoppler OK1, das Gatter IC1.A, C2 und IC1.B, C3 so angesteuert, daß am Ausgang IC1.D ein positiver, digitaler Impuls von ca, 15μs entsteht. Durch die zusätzliche Auswertung des invertierten drehbewegungsabhängigen Signals wird eine Frequenzverdopplung erreicht. Diese Signale werden unter anderem auf den Reseteingang des Teilers IC3 gegeben. Des weiteren wird über den Oszillator IC3 sowie P1, C6 und R9 eine Referenzfrequenz am Ausgang Q erzeugt. Beide Signale (drehbewegungsabhängige Impulse sowie Referenzfrequenz) werden anschließend über den Flip– Flop IC2.D und IC2.C, C4 und R7 so bewertet, daß dann eine Signaländerung am Ausgang des Gatters IC2.A entsteht wenn die Referenzfrequenz, bedingt durch die drehbewegungsabhängige Triggerung ausbleibt (Überschreitung des eingestellten Wertes). Gleichzeitig wird die Signaländerung über das Gatter IC2.B und IC4 gespeichert, und über R13 und T1 dem Optokoppler OK2 zugeführt. Durch diese Ansteuerung wird über R14 und die Schnittstelle ST1 die Optokoppler (OK1/1 und OK1/2 = L– Signalansteuerung über einen digitalen Schalter) aktiviert.
Dieser Zustand kann nur über eine Signaländerung des Teilers IC3 Ausgang Q (Unterschreitung des eingestellten Wertes) wieder zurückgesetzt werden. Als Hysterese für die Referenzfrequenz ist das Gatter IC5 sowie C7 vorgesehen.
Die Gatter IC6.C, IC6.D sowie C11, R16 und P2 werden als Oszillator verwendet. Über R15 und C12 wird der Oszillator erst nach ca.100ms freigegeben. Durch diese Maßnahme wird ein exaktes, ohne Rücksicht auf den Spannungsanstieg bei Inbetriebnahme Einschwingen erreicht Diese Frequenz (2750Hz) wird jeweils über die Gatter IC6.A und IC6.B als dynamisches Relaisansteuersignal RAE/A und RAE/B über eine Schnittstelle der Elektronik zur Verfügung gestellt.
**Durch die Modulsteckeroption wird Immer nur eine der beiden L–Signalansteuerung möglich!**

### 3.6 Zusammenfassung

Nur bei Stillstand des überwachten Antriebs werden die Sicherheitsrelais aktiviert. Durch die interne Reihenschaltung der Arbeitskontakte wird eine redundante Auswertung erreicht. Bei Verwendung dieser Auswertung für den Betrieb des Verriegelungsmoduls sowie dessen Kontaktüberwachung über die Sicherheitsrelaiskombination ist ein sicherer Arbeitsraum gewährleistet.
Durch die Auswahl verschiedener L–Signalansteuerungen wird die Anwendung erleichtert. Bei nichtkonstanter Auslaufzeit des Antriebs ist die Ansteuerung über den digitalen Schalter geeignet.

Bei konstanter (z.B. über elektronische Bremsgeräte) Auslaufzeit kann die nachverzögerte L-Signalansteuerung verwendet werden, wobei die notwendige Zeitverzögerung vom Anwender selbst bestimmt wird (1...30s).

| Fa. E L G E | | Geprüft: |
|---|---|---|
| Grundtyp: | EBUV | 16.01.93 |
| Serientyp: | EBUV / R | |

13

| Fa. E L G E | | Geprüft: |
|---|---|---|
| Grundtyp: | EBUV | 16.02.93 |
| Serientyp: | EBUV / N | |

Schematic: EBUV/N

Schematic: EBUV/R

| Fa. ELGE | Geprüft: |
|---|---|
| Grundtyp: EBUV | 16.02.93 |
| Serientyp: PRINZIP I | |

MODULSTECKER

*Kombination mit System*

Die frontseitig abgebildete Einheit beinhaltet zwei voneinander unabhängige Überwachungssysteme. Die Drehbewegungsüberwachung wird zur Bestimmung des Stillstandes benötigt. Zur Sicherung der mechanischen Schutzeinrichtung wird die Sicherheitsrelaiskombination verwendet. Beide Systeme werden bevorzugt für Antriebe mit gefahrbringendem Bewegungsnachlauf genutzt und über einen Betriebsspannungsanschluß versorgt.

Das Überwachungssystem steht in zwei Ausführungen zur Verfügung:

|  |  | Anwendung bei: |
|---|---|---|
| Überwachungssystem | Typ: EBUV06 | 3 ... 9 Zähne |
| Überwachungssystem | Typ: EBUV 12 | 6 ... 18 Zähne |

**Zulassungen** (siehe Bescheinigungen)

- Schweizerische Unfallversicherungsanstalt (SUVA) Zulassung No "Beantragt"
- Berufsgenossenschaft Fachausschuß Elektrotechnik (BG) Zulassung No A – ET "Beantragt"

18

**Achskreisinterface**

**2.1 Achskreisinterface**

Damit die vereinbarte Funktion auch bei einem einzelnen Fehler nicht beeinträchtigt wird, muß eine redundante Signalauswertung verwendet werden. Das bedeutet, daß die Drehbewegungsinformation unabhängig voneinander zweikanalig zur Verfügung gestellt werden muß.

**2.2 dynamische Signalansteuerung**

Durch Abtastung, beispielsweise einer mit dem Antrieb gekoppelten Zahnscheibe über einen Sensor(Näherungsschalter), wird ein proportional zur Bewegung erzeugtes digitales Signal dem dynamischen Überwachungskanal "$IN_A$" zugeführt. Die maximal zulässige Drehbewegungsfrequenz 900Hz bzw. 1800Hz ist über die Geräteausführung **EBUV 06** bzw. **EBUV 12** festgelegt. Dadurch können je nach Zähneanzahl 6000...18000 Umdrehungen pro Minute bearbeitet werden.

**Drehbewegung + 60 x Zähnezahl = Drehbewegungsfrequenz**

Die Betriebsspannungversorgung des Sensors erfolgt durch das Überwachungssystem über die Anschlußklemme "+12V".

**2.3 statische L−Signalansteuerung**

Durch, eine über den Arbeitskontakt des Antriebsschützes geführte Gleichspannung, wird zeitgleich mit der Drehbewegungsentstehung ein Signal dem statischen Überwachungskanal "L" zugeführt. In Verbindung mit der unter 2.2 beschriebenen Signalerzeugung wird eine zweikanalige Ansteuerung erreicht.
Da bei Abschaltung des Antriebes ein Bewegungsnachlauf in Abhängigkeit der Masse entsteht, wird es notwendig, das statische Signal bis <20U/min zu speichern. Diese Funktion wird geräteintern über den Modulstecker **MT** gewährleistet und ist von 1...30s einstellbar. Nur beikonstanter Bewegungsnachlaufzeit z.B. durch Bremseinrichtungen ist diese Art der L−Signalansteuerung möglich.
(Fehlerhafte, einkanalige Signalansteuerung entsteht durch manuelle, muskelabhängige Drehbewegungserzeugung).

**2.4 statische L−Signalansteuerung mit Näherungsschalter**

Beispielsweise durch Abtastung der bereits vorhandenen Zahnscheibe über einen zweiten Sensor (Näherungsschalter), wird ein proportional zur Bewegung erzeugtes digitales Signal dem dynamischen Überwachungskanal "$IN_B$"−zugeführt. Dieser dynamische Drehbewegungseingang arbeitet als frequenzabhängiger Schalter, und führt das dadurch erzeugte statische L−Signal geräteintern auf die Anschlußklemme "L". In Verbindung mit der unter 2.2 beschriebenen Signalerzeugung wird ebenfalls eine zweikanalige Ansteuerung erreicht. Bei nichtkonstanter Bewegungsnachlaufzeit ist diese Art der L−Signalansteuerung auszuwählen.
Über zwei separate Modulstecker **MT** bzw. **MD** wird die der L−Signalansteuerung ausgewählt wobei aber immer nur eine angewendet werden kann.

**Achskreisfunktion**

**3.1 Achskreisfunktion**

Nach Inbetriebnahme des Überwachnungssystems wird die Stillstandsmeldung nach ca. 3s über den Arbeitskontakt (13/14) bestätigt. Bei korrekter über Drehbewegung erzeugten Signalansteuerung des Achskreisinterface wird die Stillstandsmeldung durch Öffnen des Arbeitskontaktes beseitigt. Erst bei Unterschreitung einer durch die zähneabhängiger Restbewegung wird die Stillstandsmeldung erneut über den Arbeitskontakt bereitgestellt.

**20 + Zähnezahl = Restbewegung/min**

— Bewegung & Bewegungsnachlauf          — Stillstandsmeldung über den Arbeitskontakt 13/14

### 3.2 Funktionsprüfung

Durch Betriebshemmung, bei Auftreten eines Fehlers, wird eine sichere Stillstandserkennung gewährleistet. Über redundante (zweikanalige) Drehbewegungsauswertung und systeminterner Funktionsprüfung wird diese Forderung erreicht Diese Prüfung ist drehzahlabhängig und über die Auswahl der Zähnezahl festgelegt. Je nach Zähnezahl wird die Funktionsprüfung bei >40 bis <140 U/min durchgeführt. Aus diesem Grund wird eine Mindestdrehzahl des Antriebs von >200U/min benötigt.
Bei fehlerhafter Ansteuerung (z.B. einkanalig) des Achskreises oder fehlerhaltes Überwachungssytem wird keine Stillstandsmeldung über den Arbeitskontakt erteilt. Dieser Zustand bleibt auch nach Beseitigung der Ursache vom Überwachungssystem gespeichert und kann nur durch erneute Inbetriebnahme quittiert werden.

### 3.3 Störungsmeldung

Derfehlerhafte Zustand wird durch das Überwachungssystem über eine optische Kontrolle angezeit Zusätzlich wird ein Gleichspannungssignal (+24V/1A) an der Anschlußklemme "Out" bereitgestellt. Durch die oben beschriebene Maßnahme wird die Anzeige sowie die Störungsmeldung zurückgesetzt.

### Steuerungsinterface

### 4.1 Steuerungsinterface

Damit die vereinbarte Funktion auch bei einem einzelnen Fehler nicht beeinträchtigt wird, muß eine redundante Signalauswertung verwendet werden. Das bedeutet, daß die Schutztürposition unabhängig voneinander diversitär zur Verfügung gestellt werden muß.

### 4.2 Signalansteuerung

Die Sicherheitsrelaiskombination verfügt über zwei voneinander unabhängige Sicherheitskreise. Über die dadurch getrennte Signalbewertung wird eine relevante auf Schutzeinrichtung bezogene Aussage erreicht. Für die Anforderung der erhöhten Sicherheit ist auch eine Antriebsschützüberwachung vorgesehen. Auch die für den Entriegelungsvorgang benötigte Selbsthaltung wird durch die Sicherheitsrelaiskombination zur Verfügung gestellt. Das Resultat dieser Bewertung wird über einen dafür vorgesehenen Ausgangskontakt als Freigabsignal zur Verfügung gestellt.

*Steuerungsfunktion*

**5.1 Steurungsfunktion**

Bei offener Schutzeinrichtung und aktiviertem Magnetsystem wird durch eine standardisierte Kontaktverknüpfung des Verriegelungsmoduls ein Gleichspannungssignal an die Anschlußklemme "2" zugeführt. Dadurch wird die Möglichkeit einer Folgeansteuerung geräteintern an der Anschlußklemme "8" vorbereitet. Dieser Vorgang ist zusätzlich von der Kontaktvervielfähltigungsüberwachung an den Anschlußklemmen "X1/X2" abhängig. Nach Schließender Schutzeinrichtung wird zwangsläufig die seitherige Ansteuerung unterbrochen. Erst durch den elektromechanischen Verriegelungvorgang wird ein Gleichspannungssignal an der Anschlußklemme "8" zugeführt Bei fehlerfreier, geräteinterner Funktion wird durch diese Ansteuerung der Freigabepfad an der Anschlußklemme "33/34" aktiviert. Dieser Zustand bleibt bis zum Entriegelungsvorgang bestehen. Ein erneutes Freigabesignal kann nur dann erreicht werden, wenn der Handlungsablauf wie oben beschrieben durchgeführt wird.

Die Schutzeinrichtung signalisiert über relevante Kontaktansteuerung folgende Zustände:
Sicherheitseinrichtung geöffnet; Verriegelung deaktiviert!
Sicherheitseinrichtung geschlossen; Verriegelung aktivert!
Dieser Betriebszustand wird durch die Sicherheitsrelaiskombination wie folgt ausgewertet:
Freigabepfad deaktiviert; keine Antriebzuschaltung möglich!
Freigabepfad aktiviert; Antriebszuschaltung möglich!
Diese Maßnahmen ergibt daß nur durch fehlerfreie Ansteuerung über die Schutzürpositionsschalter sowie die Funktion des Verriegelungsmoduls und natürlich auch eine fehlefreie Funktion der Sicherheitsrelaiskombination der Freigabekontaktkreis aktiviert wird.

**5.2 Kombination beider Systeme**

Wird die zuvor beschriebene Stillstandserkennung (3.1 bis 3.2) auf die Anschlußklemme "B1" geführt kann eine Entriegelung nur bei Stillstand des überwachten Antriebs vorgenommen werden. Durch diese kombinierte Maßnahme wird sichergestellt, daß der Arbeitsraum nur nach erreichen des Stillstandes betreten werden kann. Bei einem fehlerhaften Zustande wird die Freigabe und somit Antriebzuschaltung bzw. Eintritt in den Arbeitsraum sicher verhindert.

**5.3 Revision**

Durch die selbstüberwachende Funktion beider Systeme kann eine kann eine zeitlich festgelegte Revision entfallen.

**Technische Daten I**

Folgende elektrische Verbindungen sind zwischen dem zu überwachendem Antrieb und dem Überwachungssytem herzustellen.

**6.1 Achskreisinterface (Stillstandserkennung)**

1 Eingang ($IN_A$) für die dynamische Signalansteuerung über Näherungsschalter

| | |
|---|---|
| – Eingangsspannungsbereich | 10...24V |
| – Eingangsbelastung | < 12mA |
| – Eingangsfrequenz bei Gegentaktfunktion | < 3KHz |
| – Eingangsfrequenz bei Schließer– oder Öffnerfunktion | < 1KHz |
| – Eingangsstörsignalunterdrückung | < 750µs |
| – Tastverhältnis | = 50% |

1 Eingang (L) für die statische Signalansteuerung über Kontakt

| – Eingangsspannungsbereich | 24V±15% |
| – Eingangsbelastung | < 12mA |
| – Eingangsstörsignalunterdrückung | < 10ms |

*oder*

*1 Engang (IN$_B$) für die statische Signalansteuerung über Naherungsschalter (Daten wie Eingang IN$_A$)*

**6.2 Sicherheitsskreisinterface** *(Sicherheitsrelaiskombination)*

*1 Eingang reserviert für Entriegelungskontaktkreis (2)*
*1 Eingang reserviert für Verriegelungskontaktkreis (8)*

| – Eingangsspannungsbereich | 24V±15% |
| – Eingangsbelastung | > 20mA |

**6.3 Steuerungskreisinterface** *(Sicherheitsrelaiskombination)*

*2 Eingänge reserviert für Entriegelungstaster (Öffner)*
*2 Eingänge reserviert für Verriegelungstaster (Schließer)*

| – Tasterspannung | 24V±15% |
| – Tasterstrom (inklusiv Magnetstrom) | < 2,0A |

**6.4 Störmeldung**

| – Ausgangsspannung | 24V±15% |
| – Ausgangsstrom | < 1.0A |

**6.5 Ausgangskreisinterface** *(Sicherheitsrelaiskombination)*

*1 Ausgänge galvanisch getrennt, reserviert für die Stillstandsmeldung*
*1 Ausgänge galvanisch getrennt, reserviert für die Drehbewegungsfreigabe*

| – max. Kontaktspannung | 250V/AC |
| – max. Kontaktstrom | 20A/16ms |
| – max. Kontaktstrom | 5A/AC |
| – Kurzschlußsicherung | 5A/mtr |

EP 0 617 225 A1

*Applikationsbeispiel Hardware*

*8.1 Wie oben dargestellt wird die Antriebsenergiezuschaltung wie folgt praktiziert:*

*Nach Inbetriebnahme wird durch Schließen des Arbeitskontaktes "13/14" der Verriegelungsmagnet aktiviert. Dadurch erfolgt die vorbereitende Ansteuerung des Sicherheitskreises "K1.2". Nach Schließen der Schutzeinrichtung und Betätigung des Verriegelungstasters wird der Magnet deaktiviert. Aus der daraus entstehenden Ansteuerung des Sicherheitskreises "K1.8" wird der Freigabekontakt "33/34" geschlossen. Eine Betätigung des Tasters "Ein" aktiviert den Schütz "K1", "Über die Antriebsbewegung wird der Arbeitskontakt (Stillstandserkennung) "13/14" geöffnet. Durch diese Maßnahme wird eine Entriegelung sicher verhindert.*

*Nach erreichen des Stillstandes wird durch Schließen des Arbeitskontaktes "13/14" die Entriegelung vorbereitet. Bei Entriegelung wird der Freigabekontakt "33/34" geöffnet und eine Antriebszuschaltung sicher verhindert.*

*Die fehlerfreie Funktion des Schützes "K1" wird über die Kontaktvervielfältigung "X1/X2" überwacht.*

**Applikationzbeispiel Achskreis I**

**9.1 Beispiel für statische L–Signalansteuerung mit Näherungsschalter** (*Nur bei Modulstecker "MD" möglich*)

Diese Ansteuerungsmethode erfordert folgende Sensormontage:

Wie bei dieser linearen Darstellung des Zahnrades muß bei einer Entdämpfung des 1. Sensors zeitgleich eine Bedämpfung des 2. Sensors gewährleistet sein. Zudem sollte die Be– und Entdämpfungsfläche ein Verhältnis von 1:1 aufweisen. Die Positionsdifferenz sollte ±25% nicht übersteigen.
Weitere Hinweise zur Montage müssen bei den Sensorherstellern erfragt werden.

24

*Applikationsbeispiel Achskreis II*

**10.1 Beispiel für statische L – Signalansteuerung über einen Arbeitskontakt** *(Nur bei Modulstecker "MT" möglich)*

Das Diagramm zeigt, daß bei Abschaltung der Antriebsenergie über "K1" die Zweikanaligkeit der Ansteuerung nicht mehr gegeben wäre. Aus diesem Grund wird eine einstellbare Speicherung des L – Signals für die Zeit des Bewegungsnachlaufes (<20U/min) zur Verfügung gestellt.

**Fehlercheckliste**

Bei fehlerbehafteter Funktion müssen die hier aufgeführten Punkte geprüft bzw. Maßnahmen eingeleitet werden.

*Keine Funktion bei inbetriebnahme*

- *Anschlußbedingungen?*
- *Spannungsversorgung des Gerätes sowie der Sensorik?*
- *Ansteuerung der Sicherheitskreise sowie der Kontaktvervielfältigung?*
- *Ansteuerung des Verriegelungsmagneten?*
- *Ansteuerung der Achskreise?*
- *Systemfremde elektromagnetische Störgrößen?*
  *Um die größtmöglichste Störfestigkeit einer Anlage zu erreichen, sind EMV—Maßnahmen z.B. RC—Glieder für die Schützpulen seitens Steuerungshersteller notwendig.*

*Sporatische Funktionsstörung*

- *Systemfremde elektromagnetische Störgrößen?*
  *Um die größtmöglichste Störfestigkeit einer Achskreisansteuerung zu erreichen, sind EMV—Maßnahmen wie getrennte Energie— und Steuerkabelführungen notwendig.*
- *Kontaktabhängige L—Signalerzeugung?*
  *Über eine externe zusätzliche Belastung kann der für die Schaltsicherheit geforderte Kontaktstrom erhöht werden.*
- *Sensoren auf richtige Montage und störungsfreie Signalerzeugung?*
  *Bei nichtausreichender Montagefestigkeit der Sensoren können mechanische Schwingungen auftreten und somit eine Bereichsüberschreitung verursachen.*
- *Bereichsüberschreitung?*
  *Um die größtmöglichste Funktionsicherheit zu erreichen, sollte die Drehbewegungsfrequenz 90% des zulässigen Bereichs nicht überschreiten.*
- *Funktionsmodulsteckerauswahl auf die dazu gehörende Ansteuerungsart?*
  *Wenn auch bei richtiger Anschlußbedingung sowie fehlerfreier Ansteuerung eine Funktionsstörung auftritt, wird eine Überprüfung des Überwachungssystems beim Hersteller (Fa. ELGE) notwendig.*

**Patentansprüche**

1. Sicherheitsüberwachungsverfahren bei Schutzeinrichtungen mit normaler oder erhöhter Sicherheit von Bewegungen, insbesondere Drehbewegungen durchführende Maschinen (Zielanlage), wobei zur Drehbewegungs- und Stillstandserkennung für jeden Achskreis jeweils ein dynamisches Signal (proportional zur Drehzahl) und ein statisches Signal (0/1) ausgewertet werden und eine Freigabe des schützgesteuerten Antriebs-Strompfades nur dann erfolgt, wenn beide Signale gleichzeitig Maschinen-Stillstand signalisieren in Verbindung mit geschlossener Schutzeinrichtung (Schutzhaube, Tür u. dgl.), dadurch gekennzeichnet, daß das statische Stillstands-Erkennungssignal (L) aus einer Hardwarebeschaltung im Einschaltschützstrompfad als Kontaktgabe gewonnen wird und nach Abschaltung der Zielanlage der statische Signalinhalt im Sinne einer Abschaltverzögerung für einen vorgegebenen Zeitraum gespeichert wird zur Vermeidung einer Fehlerauslösung durch die Auswerteschaltung (Elektronik EBUV) bei unterschiedlichem dynamischen und statischen Signal.

2. Sicherheitsüberwachungsverfahren bei Schutzeinrichtungen mit normaler oder erhöhter Sicherheit von Bewegungen, insbesondere Drehbewegungen durchführende Maschinen (Zielanlage), wobei zur Drehbewegungs- und Stillstandserkennung für jeden Achskreis jeweils ein dynamisches Signal (proportional zur Drehzahl) und ein statisches Signal (0/1) ausgewertet werden und eine Freigabe des schützgesteuerten Antriebs-Strompfades nur dann erfolgt, wenn beide Signale gleichzeitig Maschinen-Stillstand signalisieren in Verbindung mit geschlossener Schutzeinrichtung (Schutzhaube, Tür u. dgl.), dadurch gekennzeichnet, daß das statische Stillstands-Erkennungssignal (L) aus einer zusätzliche Drehzahlerfassung mittels Näherungsschalter in Form eines dynamischen Signals gewonnen und geräteintern einem frequenzabhängigen Schalter zugeführt wird, der das ursprüngliche dynamische Signal dadurch in ein statisches Signal (L) umwandelt, daß oberhalb einer vorgegebenen Impulszahl auf statisches Signal (L = 1) und unterhalb einer vorgegebenen Impulszahl auf L = 0 erkannt wird.

3. Sicherheitsüberwachungsverfahren nach Anspruch 1, dadurch gekennzeichnet, daß die Dauer der einstellbaren Speicherung des L-Signals für die Zeit des Bewegungsnachlaufs der Zielanlage durch Einstellung an einem Steckmodul (MT) am Gehäuse der Sicherheitsüberwachungsvorrichtung vorgenommen wird.

4. Sicherheitsüberwachungsverfahren nach Anspruch 2, dadurch gekennzeichnet, daß das dynamisch mittels eines Näherungsschalters gewonnene zweite Stillstandserkennungssignal dadurch in ein statisches L-Signal umgewandelt wird, daß ein äußerer Steckmodul (MD) am Gehäuse der Sicherheitsüberwachungsvorrichtung den frequenzabhängigen Schalter aktiviert, dem das impulsförmige Drehzahlsignal zugeführt ist.

5. Sicherheitsüberwachungsverfahren nach einem der Ansprüche 1-4, dadurch gekennzeichnet, daß bei Vorliegen eines koinzidenten Stillstandsignals an beiden Eingängen (INA für dynamisches Signal und L für statisches Signal) der auswertenden Elektronik (EBUV) ein Stillstandserkennungs-Arbeitskontakt (26) geschlossen und ein in diesem Strompfad liegender Verriegelungsmagnet (D) aktiviert wird zur Ansteuerung eines Vorbereitungsstrompfads (III) zur elektronischen Auswerteschaltung (EBUV), daß anschließend nach Schließen der Schutzeinrichtung und Betätigung eines Verriegelungstasters (25) der Verriegelungsmagnet (D) wieder deaktiviert und hieraus eine Ansteuerung eines Sicherheitsstrompfades (IV) resultiert, was zur Schließung eines Freigabekontaktschalters (17) im Stromkreis des Motorschaltschützes (K) und entsprechend zur Freigabe der Antriebsenergiezuschaltung führt, bei gleichzeitiger aufrechterhaltender Stromlosigkeit des Verriegelungsmagnets (D) in der Schutzeinrichtungs-Verriegelungsposition durch Öffnen des Stillstandserkennungs-Arbeitskontaktes (26) über die von der elektronischen Auswerteschaltung (EBUV) erfaßte Antriebsbewegung.

6. Vorrichtung zur Sicherheitsüberwachung von Schutzeinrichtungen mit normaler oder erhöhter Sicherheit von Bewegungen, insbesondere Drehbewegungen durchführenden Maschinen (Zielanlage) zur Durchführung des Verfahrens nach einem oder mehreren der Ansprüche 1-5, mit Sensoren zur Drehbewegungs- und Stillstandserkennung für jeden Achskreis zur Erstellung jeweils eines dynamischen Signals proportional zur Drehbewegung und eines statischen Signals (0/1) und Auswertung durch eine elektronische Steuerungsschaltung (EBUV), die einen schutzgesteuerten Strompfad für die Zielanlage nur dann freigibt, wenn beide Drehbewegungs- bzw. Stillstandserkennungssignale koinzidieren, dadurch gekennzeichnet, daß das Gehäuse der Sicherheitsüberwachungsvorrichtung (10) eine Steckkontaktanordnung aufweist zur wahlweisen Aufnahme eines ersten Modulsteckers (MT), der eine einstellbare Speicherung des statischen L-Signals für die Zeit eines Bewegungsnachlaufs bei Abschaltung der Antriebsenergie der Zielanlage ermöglicht bzw. eines Modulsteckers (MD) zur Erzeugung einer statischen L-Signalansteuerung mittels eines (zweiten), unmittelbar die Drehbewegung des Antriebsmotors erfassenden Sensors (Näherungsschalters), wobei der zweite Modulstecker (MD) einen frequenzabhängigen Schalter für das dynamisch gewonnene Drehbewegungssignal zu dessen Umwandlung in ein statisches L-Signal bereitstellt.

7. Vorrichtung nach Anspruch 6, dadurch gekennzeichnet, daß zur Erzeugung eines hardwaregesteuerten L-Signals als zweites (redundantes) Drehbewegungs- und Stillstanderkennungssignals ein zusätzlicher Relaiskontakt (k3) am Antriebssteuerschütz (K) für den Elektromotor der Zielanlage vorgesehen ist, dessen statischer Signalinhalt durch den mit der Sicherheits überwachungsvorrichtung verbundenen Modulstecker (MT) erster Art nach Abschaltung für eine vorgegebene Zeitdauer verzögert wird.

8. Vorrichtung nach Anspruch 6, dadurch gekennzeichnet, daß in Verbindung mit einem zweiten Steckmodul (MD) ein frequenzabhängiger Schalter vorgesehen ist, dem ein dynamisches, mittels eines zweiten Näherungsschalters gewonnenes Signal zugeführt ist zur Umwandlung in ein statisches L-Signal.

9. Vorrichtung nach einem der Ansprüche 6-8, dadurch gekennzeichnet, daß einen Drehbewegungsstillstand angebende Anschlüsse der elektronischen Steuerungsschaltung (EBUV) auch separat als äußere Anschlußklemmen (Kl13/Kl14) herausgeführt und am Gehäuse angeordnet sind.

Fig. 1

EP 0 617 225 A1

Fig. 2

# Fig. 3

12 — Sensor

Signal

11 —

Motor

Antriebsenergie

MT

1s  30

Modulstecker

k3

Türsig. = Zu    +24V

EBUV

| 33 | 8 | B1 | B2 | B3 | A1 | 13 | 12V | INa | 0V |

Modul MT

| 34 | 2 | X1 | X2 | Out | 14 | | L | INb | A2 |

Freigabe    Türsig. = Auf    Störmeldung    Stillstandserk.    Minus

10

# Fig. 4

Signalverlauf

Zeit

—— Bewegung & Bewegungsnachlauf          ····· Stillstandsmeldung über den Arbeitskontakt 13/14

# Fig. 5

a

Signalverlauf

T0          T1          Zeit          T3

—— Bewegung & Bewegungsnachlauf    ··•·· konatktgesteuertes L-Signal    ··•·· einstellbare int. L-Signal Speicherzeit

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | DE-U-93 04 170 (ELGE ELEKTRONIK-GERÄTEWERK GMBH & CO)<br>--- | 1-9 | F16P3/08 |
| A | EP-A-0 465 710 (ELGE ELEKTRONIK-GERÄTEWERK GMBH & CO)<br>--- | | |
| D,A | EP-A-0 501 218 (ELGE ELEKTRONIK-GERÄTEWERK GMBH & CO)<br>--- | | |
| A | GB-A-1 470 997 (GENERAL MOTORS LIMITED)<br>----- | | |

**RECHERCHIERTE SACHGEBIETE (Int.Cl.5)**

F16P

Der vorliegende Recherchenbericht wurde für alle Patentansprüche erstellt

| Recherchenort | Abschlußdatum der Recherche | Prüfer |
|---|---|---|
| DEN HAAG | 15. Juni 1994 | Pipping, L |

EPO FORM 1503 03.82 (P04C03)